# EUROPÄISCHE PATENTSCHRIFT

(11) **EP 1 455 998 B1**
(45) Veröffentlichungstag und Bekanntmachung des Hinweises auf die Patenterteilung: **28.02.2007**
(21) Anmeldenummer: 02795001.3
(22) Anmeldetag: 14.12.2002
(51) Int. Cl.: B29C 44/34, C08J 9/06, C08J 3/24

(54) **VERFAHREN ZUR VERNETZUNG EINES SCHÄUMBAREN KUNSTSTOFFES**
PROCESS FOR CROSSLINKING A FOAMABLE POLYMER
PROCEDE DE RETICULATION D'UN POLYMERE EXPANSIBLE

(30) Priorität: 17.12.2001 DE 10161916
(43) Veröffentlichungstag der Anmeldung: 15.09.2004
(73) Patentinhaber: Henkel KGaA, 40589 Düsseldorf (DE)
(72) Erfinder: SALAMON, Marcel, 32457 Porta-Westfalica (DE)
(86) Internationale Anmeldenummer: PCT/DE2002/004589
(87) Internationale Veröffentlichungsnummer: WO 2003/051601

(56) Entgegenhaltungen:
- DE-A- 10 057 583
- FR-A- 1 499 714
- US-A- 6 124 370
- DATABASE WPI Section Ch, Week 197711 Derwent Publications Ltd., London, GB; Class A17, AN 1977-19052Y XP002251387 & JP 52 014671 A (HITACHI CHEM CO LTD) 3. Februar 1977 (1977-02-03)

## Beschreibung

Die Erfindung betrifft ein Verfahren zur Behandlung eines schäumbaren Kunststoffes bei dem der Kunststoff von einem Ausgangszustand mit höherer Dichte mittels eines Treibmittels in einem Schäumvorgang in einen aufgeschäumten Zustand geringerer Dichte überführt wird.

Ein solches Verfahren ist aus der US-A-6 124 370 bekannt. Dabei wird der Kunststoff vor dem Schäumvorgang durch ein erstes Vernetzungsmittel und nach dem Schäumvorgang durch ein zweites Vernetzungsmittel vernetzt.

Herkömmliche schäumbare Kunststoffe bestehen in der Regel aus einem Basispolymer, einem Treibmittel und Zusätzen. Wird der Kunststoff geschmolzen, so wird das Treibmittel durch die zugeführte Hitze aktiviert und der Kunststoff schäumt auf. Als Beispiel für die sonstigen Zusätze seien Farben oder Weichmacher genannt, die dem aufgeschäumten Kunststoff die gewünschte Farbe geben oder eine gewünschte Elastizität verleihen.

Ein Nachteil dieser aufschäumbaren Kunststoffe ist, daß diese während des Schäumvorganges aufgrund der Gravitation sacken und der Schäumvorgang dadurch nicht isotrop verläuft. Eine dem Kunststoff vor dem Schäumvorgang gegebene Struktur oder Form geht in der Regel verloren, da die Schmelze desselben nicht hinreichend "stabilisiert" ist.

Der Erfindung liegt daher die Aufgabe zugrunde, dieses Problem zu vermeiden bzw. abzumildern.

Die Aufgabe wird erfindungsgemäß gelöst durch ein Verfahren gemäß Anspruch 1.

Vorteilhafte Weiterbildungen der Erfindung sind in den Unteransprüchen aufgezeigt.

Die Erfindung wird nachfolgend anhand verschiedener Ausführungsbeispiele zur Durchführung des erfindungsgemäßen Verfahrens unter Bezugnahme auf eine Zeichnung erläutert. Es zeigen:
- Fig. 1: eine Seitenansicht einer Vorrichtung zum Bestrahlen eines Kunststoffteils;
- Fig. 2: eine perspektivische Ansicht einer Vorrichtung zum Bestrahlen eines Kunststoffteils durch eine Maske und
- Fig.: 3 eine perspektivische Ansicht eines nach dem erfindungsgemäßen Verfahren behandelten Kunststoffformteils, welches mittels eines Formteils in einem Rahmen eines Automobils angeordnet ist.

Gemäß dem erfindungsgemäßen Verfahren wird ein aufschäumbarer Kunststoff vor dem Schäumvorgang durch ein erstes Vernetzungsmittel und während des Schäumvorgangs durch ein zweites Vernetzungsmittel vernetzt.

Ein Kunststoff, der nicht vernetzt ist, verliert während des Schäumvorgangs weitgehend seine Form oder Struktur, die das Formteil, aus dem der Schaum entsteht, hatte. Dies liegt zum einen an den starken strukturellen Veränderungen des Kunststoffes während des Schäumvorganges und zum anderen an der Gravitation, unter deren Einfluß der Schaum, insbesondere beim Abkühlen im oder nach dem Schaumvorgang, sackt. Um die Form bzw. Struktur während des Aufschäumens zu erhalten, ist es notwendig, den Kunststoff zu vernetzen.

Durch den Einsatz eines Vernetzungsmittels werden Polymerketten in dem Kunststoff bereichsweise zerstört und es bilden sich Radikale innerhalb desselben. Die freien Enden der Polymerketten sowie die freien Radikale gehen untereinander neue Bindungen ein, so daß es zu einer teilweisen Vernetzung der Polymere kommt. Wird ein derartig vorbehandelter Kunststoff über den Schmelzpunkt desselben erhitzt, so weicht die feste Struktur des Kunststoffes auf und es bildet sich ein "stabilisiertes Material", welches eine höhere Viskosität als eine Schmelze aufweist. Die höhere Viskosität ist in der teilweisen Vorvernetzung des Kunststoff begründet und führt dazu, daß das stabilisierte Material eine gewisse Formstabilität aufweist. Wird nun der Schäumvorgang ausgelöst, z. B. durch ein wärmeaktivierbares Treibmittel, so hat der aus dem stabilisierten Material entstehende Schaum im wesentlichen die Form bzw. Struktur des zugrundeliegenden Formteiles. Während des Schäumvorganges verliert das aufgeschäumte Material aus den o.g. Gründen jedoch erneut ein wenig die Form bzw. Struktur des zugrundeliegenden Formteils. Es ist daher notwendig, diese durch ein zweites Vernetzungsmittel, welches während des Schäumvorgangs aktiviert wird, zu erhalten. Unter dem Einfluß des zweiten Vernetzungsmittels werden die Polymerketten in dem Kunststoff weiter vernetzt, um die aufgeschäumte Form des Kunststoffs zu erhalten.

Der auf diese Weise entstandene Schaum hat im wesentlichen die Form des zugrundeliegenden Formteils, weist in der Regel aufgrund der Keimbildung mehr Volumen auf und ist feinporiger.

Als Vernetzungsmittel kommen physikalische und chemische Vernetzungsmittel in Betracht.

Als physikalisches Vernetzungsmittel kann insbesondere hochenergetische Strahlung verwendet werden, die den Kunststoff bevorzugt vollständig durchdringt. Die Energie der Strahlung sollte so gewählt sein, daß die mittlere freie Weglänge der Strahlung in dem Kunststoff größer ist als die Materialstärke des Kunststoffs in Einfallsrichtung der Strahlung. Bevorzugt wird Elektronenstrahlung, insbesondere mit einer Energie zwischen 100 keV und 10 MeV, verwendet, es kann aber auch Protonenstrahlung verwendet werden. Bei hinreichend großen Energien können auch Atomstrahlen oder leichte Atomkerne zur Bestrahlung verwendet werden. Ferner eignet sich als Strahlung auch Gamma- bzw. Röntgenstrahlung.

Als chemische Vernetzungsmittel können Peroxide, insbesondere organische, verwendet werden. Diese werden dem Kunststoff z.B. im Schmelzezustand vor der Bildung eines Formteiles aus der Schmelze zugeführt. Durch den radikalischen Zerfall des Peroxids wird der Kunststoff teilvernetzt und es entsteht ein teilvernetztes Formteil. Dieses wird folgend in einer Anordnung eingesetzt und aufgeschäumt. Ferner gibt es chemische Vernetzungsmittel, die während des Schaumvorganges aktivierbar sind und den entstehenden Schaum teilvernetzen.

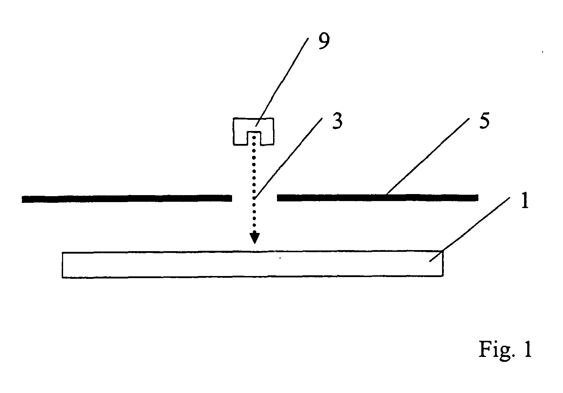

In einem ersten Ausführungsbeispiel des erfindungsgemäßen Verfahrens wird ein aufschäumbarer Kunststoff 1, insbesondere als gespritztes Formteil, in Fig. 1 vor dem Schäumvorgang mit hochenergetischer Strahlung 3 aus einer Strahlungsquelle 9 durch eine Schlitzblende 5 bestrahlt. Das so vorbehandelte Kunststoffformteil wird beispielsweise in der Karosserie eines Automobils eingesetzt, um Hohlräume in der Karosserie abzudichten.

Wird beim Erhitzen des Formteils, z.B. in einem Trockenofen zur Trocknung der Lakkierung des Automobils, der Schmelzpunkt des Kunststoffes erreicht, so bildet sich das stabilisierte Material aufgrund der physikalischen Vorvernetzung. Bei dieser Temperatur wird bevorzugt auch das durch Wärme aktivierbare Treibmittel aktiviert, so daß der Schäumvorgang ausgelöst wird. Während des Schäumvorgangs wird das zweite chemische Vernetzungsmittel aktiviert, um die Polymerketten des Kunststoffes weiter zu vernetzen. Das zweite Vernetzungsmittel kann ebenfalls bei der Aktivierungstemperatur des Treibmittels aktivierbar sein oder bei einer höheren Temperatur. Letzteres ist insbesondere dann von Vorteil, wenn ein Kunststoff verwendet wird, der durch Wärme härtbar ist und somit der Kunststoff während des Schäumvorgangs auf deutlich über den Schmelzpunkt des Kunststoffes liegende Temperaturen geheizt wird.

Die Eigenschaften des stabilisierten Materials können wesentlich über die applizierte Energiedosis gesteuert werden, mit der der Kunststoff bestrahlt wird. Wird eine zu geringe Energiedosis verwendet, so werden nicht hinreichend neue Vernetzungspunkte generiert, so daß der gewünschte Effekt nicht erzielt wird. Bei zu hohen Energiedosen wird eine so starke Vernetzung erreicht, daß das Material sehr stark stabilisiert wird, wodurch die Schäumbarkeit stark herabgesetzt ist. Wird jedoch eine Energiedosis zwischen diesen beiden Extremen verwendet, so wird das Material hinreichend stabilisiert, um die Struktur des Formteiles auch im erhitzten Zustand beizubehalten, und gleichzeitig eine zufriedenstellende Schaumfähigkeit des Materials beizubehalten.

Die tatsächlich benötigte Energiedosis hängt von dem Basispolymer, dem Treibmittel und den verwendeten Zusatzstoffen, wie beispielsweise chemischen Vernetzungsmitteln, Stabilisatoren, Kicker und Inhibitoren, ab. Bei Verwendung eines Ethylen-Vinylacetates (EVA) als Basispolymer und Azodicarbonamid als Treibmittel tritt der gewünschte Effekt in einem Energiedosisbereich zwischen 1 und 10 KGy auf, insbesondere in dem Bereich zwischen 3 und 6 KGy.

Das Basispolymer des im vorliegenden Ausführungsbeispiel verwendeten Kunststoffes ist Ethylen-Vinylacetat, wobei der Vinylacetatanteil zwischen 5 und 25 Gew.-% des EVA-Anteils ausmacht. Als Treibmittel wird Azodicarbonamid verwendet, welches durch Wärme in der Schmelze aktiviert wird. In einer bevorzugten Ausführungsform ist das Treibmittel vor der Bestrahlung in den Kunststoff eingebracht, es kann jedoch auch nach der Bestrahlung zugeführt werden.

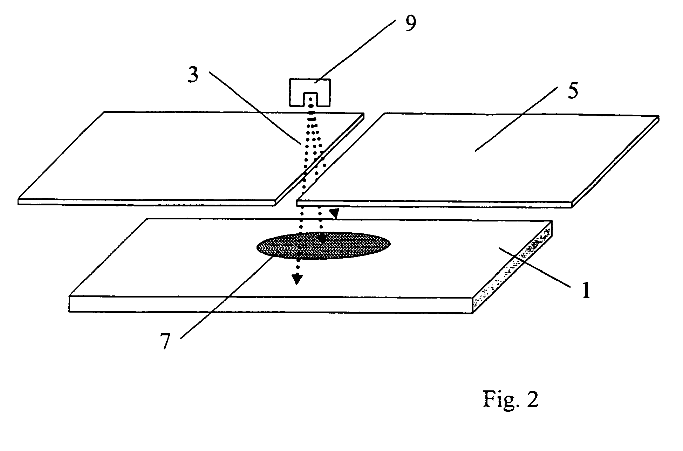

Wie in Fig. 2 gezeigt ist, können Abschnitte des Kunststoffes mittels einer Maske 7 von der Strahlung 3 abgeschattet werden. Wählt man die Energiedosis so, daß die nicht durch eine Maske abgeschatteten Bereiche des Kunststoffes 1 eine erfindungsgemäße mittlere Energiedosis aufnehmen, so entsteht auf diese Weise ein Formteil, welches abschnittsweise eine Vernetzung aufweist. Wird der Schäumvorgang ausgelöst, so schäumt der bestrahlte Bereich des Kunststoffes im wesentlichen isotrop auf, wohingegen der Schäumvorgang des nicht bestrahlten Bereichs des Kunststoffes durch die Gravitation beeinflußt ist. Auf diese Weise kann der Schäumvorgang des Formteils in gewünschter Weise beeinflußt bzw. gesteuert werden.

In einer Variation ist die Maske teildurchlässig für die Strahlung. Wird das Formteil nun mit einer hohen Energiedosis bestrahlt, so findet sich in dem Bereich des Kunststoffes, der einer hohen Energiedosis ausgesetzt war, eine starke Vemetzung. In dem Bereich des Kunststoffes, der durch die Maske teilweise von der Strahlung geschützt war, wurde lediglich eine Energiedosis aufgenommen, die in einem mittleren Bereich liegt. Während des Schäumvorgangs schäumen die Bereiche, die eine mittlere Energiedosis aufgenommen haben, isotrop auf, wohingegen der Schäumvorgang in den Bereichen, die eine hohe Energiedosis aufgenommen haben, mehr oder weniger stark gehemmt ist. Letztere Bereiche können insbesondere als Halteelemente eines Kunststoffformteiles in einer Anordnung verwendet werden, da sie auch im erwärmten Zustand noch eine gewisse Stabilität aufweisen.

In einer Variation liegt ein Halteelement als gesondertes Element aus dem gleichen Kunststoff oder einem anderen Material als das bestrahlte Kunststoffteil vor und wird an diesem befestigt, um es mittels des Halteelementes bspw. in einem mit dem aufzuschäumenden Kunststoff zu versiegelnden Hohlraum zu halten, insbesondere in einer Karosserie eines Kraftfahrzeugs.

Wird der bestrahlte Kunststoff aus einer Vorstufe, z.B. Rohware, Pulver oder Granulat, hergestellt, so kann anstelle der Bestrahlung eines fertigen Teils auch die Vorstufe, die zum Herstellen eines Teils oder Formteiles verwendet wird, bestrahlt werden.

Wird ein Formteil aus Kunststoff mit anderen Formteilen, insbes. aus Kunststoff, fest verbunden, um ein Kunststoffverbundteil zu bilden, so können diese als Ganzes oder auch nur in Bereichen der Strahlung ausgesetzt werden.

Des weiteren ist es möglich, ein oder mehrere Kunststoff(form)teile zu bestrahlen, bevor diese mit anderen Komponenten zu einem Kunststoffverbundteil zusammengefügt werden.

In einem zweiten Ausführungsbeispiel des erfindungsgemäßen Verfahrens wird einer Schmelze eines aufschäumbaren Kunststoffes ein organisches Peroxid zugemischt, wodurch diese teilvernetzt wird. Diese Teilvernetzung findet jedoch in einem so geringen Ausmaß statt, daß das folgend aus der Schmelze gespritzte Formteil vor dem Schäumvorgang mit hochenergetischer Strahlung ausreichend vernetzt wird. Auf diese Weise wird erreicht, daß das folgend eingebaute Formteil beim Erhitzten ein hinreichend stabilisiertes Material bildet.

Aufgrund der chemischen und der physikalischen Vernetzung entsteht während des Erhitzens des Formteils zunächst das stabilisierte Material. Bevorzugt wird bei dieser Temperatur das Treibmittel aktiviert, um dieses aufzuschäumen. Während des Schäumvorgangs wird das chemische Vernetzungsmittel erneut aktiviert, was zu einer weiteren Vernetzung des Schaumes, teilweise bis zur Erstarrung desselben, führt.

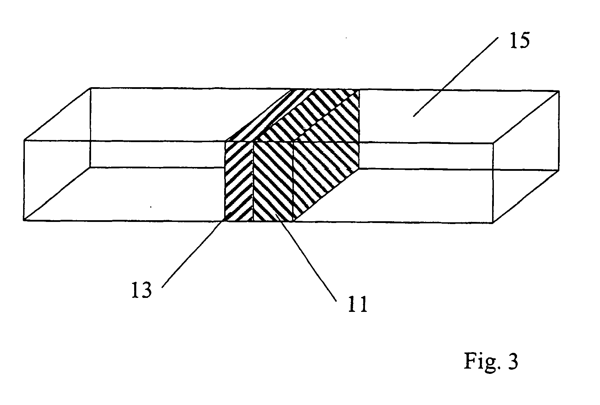

In einem dritten Ausführungsbeispiel ist sowohl das erste wie auch das zweite Vernetzungsmittel ein chemisches. Das erste Vernetzungsmittel wird bei einer Temperatur aktiviert, die kleiner ist als die Temperatur, bei der das zweite Vernetzungsmittel aktviert wird. Werden beide Mittel einer Schmelze des Kunststoffes zugeführt, so wird bei einer geeigneten Temperatursteuerung nur das erste Vernetzungsmittel aktiviert und die Schmelze folgend teilvernetzt. In einem folgenden Schritt wird aus der Schmelze ein in Figur 3 dargestelltes Formteil 11 gespritzt, welches an einem weiteren Formteil, insbesondere aus einem härteren Kunststoff, befestigt wird. Das auf diese Weise entstandene Kunststoffverbundteil wird beispielsweise in einem Abschnitt eines Rahmens 15 eines Automobils eingesetzt. In einem Trockenofen wird folgend der das Formteil 11 bildende schäumbare Kunststoff geschmolzen, wodurch das Treibmittel aktiviert wird. Die Temperatur in dem Trockenofen ist so hoch, daß nun auch das zweite chemische Vernetzungsmittel aktiviert wird und den entstehenden Schaum teilvemetzt. Ein Fließen der Schmelze zu einer Seitenwand des Rahmenabschnittes 15 wird durch die Vernetzung verhindert und der Schaum verschließt den Querschnitt des Rahmenabschnittes vollständig. Auf diese Weise ist ein Verbundkörper aus dem Schaum und dem Stahl des Rahmenabschnittes 15 entstanden, der für eine zusätzliche Stabilität in diesem Bereich des Rahmens sorgt und eine zuverlässige Abdichtung des Hohlraums leistet.

Die Treibmittel für den Kunststoff und/oder weitere Zusatzstoffe können in jeder Ausführung des Verfahrens sowohl vor, während oder auch nach der ersten Vernetzung in den Kunststoff eingebracht werden.
- 3: Strahlung
- 5: Schlitzblende
- 7: Maske
- 9: Strahlungsquelle
- 11: Formteil aus schäumbaren Kunststoff
- 13: Formteil
- 15: Rahmenabschnitt eines Automobils

## Patentansprüche

1. Verfahren zur Behandlung eines schäumbaren Kunststoffes, bei dem der Kunststoff von einem Ausgangszustand mit höherer Dichte mittels eines Treibmittels in einem Schäumvorgang in einen aufgeschäumten Zustand geringerer Dichte überführt wird, wobei der Kunststoff (1) vor dem Schäumvorgang durch ein erstes Vernetzungsmittel und während des Schäumvorgangs durch ein zweites Vernetzungsmittel vernetzt wird.

2. Verfahren nach Anspruch 1, **dadurch gekennzeichnet, daß** das erste Vernetzungsmittel ein physikalisches Vernetzungsmittel ist.

3. Verfahren nach Anspruch 1, **dadurch gekennzeichnet, daß** das zweite Vernetzungsmittel ein physikalisches Vernetzungsmittel ist.

4. Verfahren nach Anspruch 1, **dadurch gekennzeichnet, daß** das erste Vernetzungsmittel ein chemisches Vernetzungsmittel ist.

5. Verfahren nach Anspruch 1, **dadurch gekennzeichnet, daß** das zweite Vernetzungsmittel ein chemisches Vernetzungsmittel ist.

6. Verfahren nach Anspruch 2 oder 3, **dadurch gekennzeichnet, daß** hochenergetische Strahlung (3) als physikalisches Vernetzungsmittel verwendet wird.

7. Verfahren nach Anspruch 6, **dadurch gekennzeichnet, daß** Elektronen-, β-, Protonen- oder Atomstrahlung oder leichte Atomkerne als hochenergetische Strahlung (3) verwendet wird bzw. werden.

8. Verfahren nach Anspruch 6, **dadurch gekennzeichnet, daß** Röntgen- bzw. Gammastrahlung als hochenergetische Strahlung (3) verwendet wird.

9. Verfahren nach einem der Ansprüche 6 bis 8, **dadurch gekennzeichnet, daß** eine Strahlung verwendet wird, deren mittlere freie Weglänge in dem Kunststoff (1) größer ist als die Materialstärke des Kunststoffs in Einfallrichtung der Strahlung.

10. Verfahren nach einem der Ansprüche 6 bis 9, **dadurch gekennzeichnet, daß** eine physikalische Vernetzung aus mindestens zwei Richtungen durchgeführt wird.

11. Verfahren nach einem der Ansprüche 6 bis 10, **dadurch gekennzeichnet, daß** dem Kunststoff (1) durch die Strahlung (3) eine Energiedosis von 1 - 10 kGy, insbesondere 3 - 6 kGy zugeführt wird.

12. Verfahren nach einem der Ansprüche 6 bis 11, **dadurch gekennzeichnet, daß** eine Maske (7) verwendet wird, um (einen) ausgewählte(n) Teilbereich(e) des Kunststoffes (1), des Kunststoffteils oder des Kunststoffverbundteiles zu bestrahlen.

13. Verfahren nach einem der Ansprüche 6 bis 12, **dadurch gekennzeichnet, daß** örtliche Bereiche eines Kunststoffs, Kunststoffteils mit unterschiedlichen Energiedosen bestrahlt werden.

14. Verfahren nach Anspruch 4 oder 5, **dadurch gekennzeichnet, daß** Peroxide, insbesondere organische, als chemisches Vernetzungsmittel verwendet werden.

15. Verfahren nach einem der vorangehenden Ansprüche, **dadurch gekennzeichnet, daß** der Kunststoff in Form eines Pulvers, eines Granulats, einer Schmelze, eines Kunststoffteils, eines Kunststoffformteils oder eines Kunststoffverbundteils durch das erste Vernetzungsmittel vernetzt wird.

## Claims

1. Process for treating a foamable plastic, in which the plastic is converted from a starting state with relatively high density by means of a blowing agent in a foaming operation to a foamed state of lower density, the plastic (1) being crosslinked by a first crosslinking agent before the foaming operation and by a second crosslinking agent during the foaming operation.

2. Process according to Claim 1, **characterized in that** the first crosslinking agent is a physical crosslinking agent.

3. Process according to Claim 1, **characterized in that** the second crosslinking agent is a physical crosslinking agent.

4. Process according to Claim 1, **characterized in that** the first crosslinking agent is a chemical crosslinking agent.

5. Process according to Claim 1, **characterized in that** the second crosslinking agent is a chemical crosslinking agent.

6. Process according to Claim 2 or 3, **characterized in that** high-energy radiation (3) is used as the physical crosslinking agent.

7. Process according to Claim 6, **characterized in that** electron radiation, β radiation, proton radiation or atomic radiation, or light atomic nuclei, is or are used as the high-energy radiation (3).

8. Process according to Claim 6, **characterized in that** X-radiation or gamma radiation is used as the high-energy radiation (3).

9. Process according to one of Claims 6 to 8, **characterized in that** radiation whose mean free path length in the plastic (1) is greater than the material thickness of the plastic in the direction of incidence of the radiation is used.

10. Process according to one of Claims 6 to 9, **characterized in that** a physical crosslinking is carried out from at least two directions.

11. Process according to one of Claims 6 to 10, **characterized in that** an energy dose of 1-10 kGy, in particular 3-6 kGy, is supplied to the plastic (1) by the radiation (3).

12. Process according to one of Claims 6 to 11, **characterized in that** a mask (7) is used in order to irradiate (a) selected section(s) of the plastic (1), of the plastics part or of the plastics composite.

13. Process according to one of Claims 6 to 12, **characterized in that** local regions of a plastic or plastics part are irradiated with different energy doses.

14. Process according to Claim 4 or 5, **characterized in that**, peroxides, especially organic peroxides, are used as the chemical crosslinking agent.

15. Process according to one of the preceding claims, **characterized in that** the plastic is crosslinked by the first crosslinking agent in the form of a powder, of a granule, of a melt, of a plastics part, of a plastics moulding or of a plastics composite.

## Revendications

1. Procédé pour le traitement d'un matériau synthétique pouvant être moussé, dans lequel le matériau synthétique est transformé à partir d'un état de départ avec une densité plus élevée au moyen d'un agent gonflant dans un processus de moussage en un état moussé de faible densité, le matériau synthétique (1) étant réticulé avant le processus de moussage par un premier réticulant et pendant le processus de moussage par un deuxième réticulant.

2. Procédé selon la revendication 1, **caractérisé en ce que** le premier réticulant est un réticulant physique.

3. Procédé selon la revendication 1, **caractérisé en ce que** le deuxième réticulant est un réticulant physique.

4. Procédé selon la revendication 1, **caractérisé en ce que** le premier réticulant est un réticulant chimique.

5. Procédé selon la revendication 1, **caractérisé en ce que** le deuxième réticulant est un réticulant chimique.

6. Procédé selon la revendication 2 ou 3, **caractérisé en ce qu'**on utilise un rayonnement (3) hautement énergétique comme réticulant physique.

7. Procédé selon la revendication 6, **caractérisé en ce qu'**on utilise un rayonnement électronique, β, de protons ou atomique ou des noyaux atomiques légers comme rayonnement (3) hautement énergétique.

8. Procédé selon la revendication 6, **caractérisé en ce qu'**on utilise un rayonnement X ou gamma comme rayonnement (3) hautement énergétique.

9. Procédé selon l'une quelconque des revendications 6 à 8, **caractérisé en ce qu'**on utilise un rayonnement dont la longueur moyenne du parcours libre dans le matériau synthétique (1) est supérieure à l'épaisseur du matériau synthétique dans la direction incidente du rayonnement.

10. Procédé selon l'une quelconque des revendications 6 à 9, **caractérisé en ce qu'**on réalise une réticulation physique à partir d'au moins deux directions.

11. Procédé selon l'une quelconque des revendications 6 à 10, **caractérisé en ce que** le matériau synthétique (1) reçoit par le rayonnement (3) une dose énergétique de 1 - 10 kGy, en particulier de 3 - 6 kGy.

12. Procédé selon l'une quelconque des revendications 6 à 11, **caractérisé en ce qu'**on utilise un masque (7) pour irradier une (des) zone(s) partielle(s) du matériau synthétique (1), de la pièce en matériau synthétique ou du composite en matériau synthétique.

13. Procédé selon l'une quelconque des revendications 6 à 12, **caractérisé en ce que** des zones locales d'un matériau synthétique, d'une pièces en matériau synthétique sont irradiées avec des doses énergétiques différentes.

14. Procédé selon la revendication 4 ou 5, **caractérisé en ce qu'**on utilise des peroxydes, en particulier des peroxydes organiques comme réticulant chimique.

15. Procédé selon l'une quelconque des revendications précédentes, **caractérisé en ce que** le matériau synthétique, sous forme d'une poudre, d'un granulat, d'une masse fondue, d'une pièce en matériau synthétique, d'une pièce moulée en matériau synthétique ou d'un composite en matériau synthétique, est réticulé par le premier réticulant.
